# EUROPEAN PATENT APPLICATION

(11) **EP 4 611 165 A1**
(43) Date of publication of application: **03.09.2025**
(21) Application number: 23882291.0
(22) Date of filing: 20.09.2023
(51) Int. Cl.: H01M 50/578, H01G 11/06, H01G 11/18, H01G 11/78, H01M 50/107, H01M 50/152, H01M 50/533, H01M 50/545, H01M 50/559, H01M 50/56, H01M 50/588, H01M 50/593

(54) **BATTERY**

(30) Priority: 27.10.2022 JP 2022172123
(71) Applicant: Panasonic Energy Co., Ltd., Osaka 570-8511 (JP)
(72) Inventor: OKIMOTO Ryota, Kadoma-shi, Osaka 571-0057 (JP)
(74) Representative: Novagraaf International SA
(86) International application number: PCT/JP2023/034052
(87) International publication number: WO 2024/090079

(57) **Abstract**

A battery disclosed includes a case, an electrode group, a sealing unit including a conductive cap, a terminal plate 60 joined to an opening edge of the case, and an insulating plate 70 that electrically insulates the conductive cap from the terminal plate 60. The case and the terminal plate 60 are electrically connected to a first electrode, while the conductive cap is electrically connected to a second electrode. The terminal plate 60 has a first connection region to which a first external terminal 101 is to be connected. The conductive cap has a second connection region to which a second external terminal is to be connected. The terminal plate 60 has a planned breaking part 64 between the first connection region and a joint part 63 thereof joined to the opening edge of the case. The planned breaking part 64 breaks when the internal pressure of the case exceeds a predetermined value, separating the terminal plate in the axial direction of the case into a broken piece 65 on the outer peripheral side and a broken piece 66 on the inner peripheral side. Thus, a battery having a current interruption function can be provided.

## Description

### [Technical Field]

The present disclosure relates to a battery.

### [Background Art]

Batteries that can be used through repeated charging and discharging have been known conventionally (e.g., Patent Literature 1). The battery of Patent Literature 1 includes a bottomed cylindrical case having an opening at one end, an electrode group housed in the case and including a first electrode and a second electrode, and a sealing body that seals the opening of the case. The case is electrically connected to the fist electrode, and the sealing body is electrically connected to the second electrode.

### [Citation List]

### [Patent Literature]

Patent Literature 1: International Publication No. WO2017/098690

### [Summary of Invention]

### [Technical Problem]

Incidentally, an internal short circuit may occur in a battery due to an abnormality (e.g., abnormal heat generation). The internal short circuit in a battery is particularly problematic when the battery is incorporated in a battery pack. In this connection, a battery is desired that has a current interruption function for inhibiting an internal short circuit in the event of an abnormal condition, that is, a function for interrupting a current path between one (e.g., the case) of the terminals and the other (e.g., the sealing body) of the terminals. Under such a circumstance, one object of the present disclosure is to provide a battery having the current interruption function.

### [Solution to Problem]

One aspect of the present disclosure relates to a battery. The battery includes: a case with a bottomed cylindrical shape having an opening at one end thereof; an electrode group housed in the case and including a first electrode and a second electrode; a sealing unit that includes a conductive cap and that seals the opening; a terminal plate joined to an opening edge of the case and extending radially inward of the case; and an insulating plate that electrically insulates the conductive cap from the terminal plate, wherein the case and the terminal plate are electrically connected to the first electrode, the conductive cap is electrically connected to the second electrode, the terminal plate has a first connection region configured to be connected to a first external terminal, the conductive cap has a second connection region configured to be connected to a second external terminal, the terminal plate has a planned breaking part located between the first connection region and a joint part thereof joined to the opening edge of the case, and the planned breaking part is configured to break when an internal pressure of the case exceeds a predetermined value, separating the terminal plate in an axial direction of the case into a broken piece on an outer peripheral side and a broken piece on an inner peripheral side.

### [Advantageous Effects of Invention]

According to the present disclosure, a battery having the current interruption function can be obtained.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an example of a battery according to the present disclosure.
[FIG. 2] FIG. 2 is an enlarged cross-sectional view of main components of the battery of FIG. 1.
[FIG. 3] FIG. 3 is a conceptual diagram explaining a current interruption function of the battery according to the present disclosure.

### [Description of Embodiments]

Embodiments of a battery according to the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

The battery according to the present disclosure may be a primary battery such as a lithium primary battery, or may be a secondary battery such as an alkaline storage battery (e.g., a nickel-hydrogen battery or a nickel-cadmium battery), a lithium-ion secondary battery, or a lithium-metal secondary battery. In the present disclosure, power storage devices (e.g., a lithium-ion capacitor) in which at least one of the positive electrode and the negative electrode is an electrode that expresses its capacity by the Faraday reaction also belong to the category of the secondary battery.

The battery according to the present disclosure includes a case, an electrode group, a sealing unit, a terminal plate, and an insulating plate. Although the type of the battery is not particularly limited as described above, a case of a lithium-ion secondary battery will be mainly described below.

The case is formed in a bottomed cylindrical shape with an opening at one end thereof. The case may have a bottomed cylindrical shape or a bottomed prismatic shape. The case may be constituted of a conductor (e.g., a metal containing iron as a main component or a metal containing aluminum as a main component).

The electrode group is housed in the case, and includes a first electrode and a second electrode. The electrode group may be a wound electrode group of the first electrode and the second electrode, wound with a separator therebetween. The outer shape of the electrode group may be cylindrical or prismatic, for example. One of the first electrode and the second electrode is a positive electrode, while the other of the first electrode and the second electrode is a negative electrode.

The first electrode may include a first current collector having a long sheet-like shape and a first active material layer formed on a surface of the first current collector. When the first electrode is the negative electrode of a lithium-ion secondary battery, the first current collector may be constituted of a copper foil or a copper alloy foil. When the first electrode is the negative electrode of a lithium-ion secondary battery, the first active material layer may contain a negative electrode active material (e.g., a carbonaceous material or a silicon-containing material), a conductive agent, and a binder, for example. Note that the first active material layer may not be provided.

The second electrode may include a second current collector having a long sheet-like shape and a second active material layer formed on a surface of the second current collector. When the second electrode is the positive electrode of a lithium-ion secondary battery, the second current collector may be constituted of an aluminum foil or an aluminum alloy foil. When the second electrode is the positive electrode of a lithium-ion secondary battery, the second active material layer may contain a positive electrode active material (e.g., a lithium-containing transition metal oxide), a conductive agent, and a binder, for example.

The separator may be constituted of a porous sheet having ionic permeability and insulating properties. Examples of the porous sheet include a thin film having micropores, a woven fabric, and a nonwoven fabric.

The sealing unit includes a conductive cap and seals the opening of the case. The conductive cap may be exposed to the outside of the case. The conductive cap may be constituted of metal. The conductive cap may have a disc shape or a square plate shape, for example. The sealing unit may further include a current collector plate provide closer to the electrode group than the conductive cap and joined to the conductive cap, and a gasket provided between the conductive cap, the current collector plate, and the opening of the case. The current collector plate may be constituted of metal. The gasket may be constituted of an insulating resin (e.g., polypropylene).

The terminal plate is joined to the opening edge of the case and extends radially inward of the case. The terminal plate may be exposed to the outside of the case. The terminal plate may be constituted of metal. The terminal plate may have a circular ring shape or a square ring shape, for example. The terminal plate may be joined to the opening edge of the case by welding.

The insulating plate electrically insulates the conductive cap from the terminal plate. The insulating plate may be provided between the conductive cap and the terminal plate. The insulating plate may have a circular ring shape or a square ring shape, for example. The insulating plate may be constituted of an insulating resin having a melting point higher than that of the gasket.

The case and the terminal plate are electrically connected to the first electrode of the electrode group. In the above configuration, the case and the terminal plate function as one of external terminals of the battery.

The conductive cap is electrically connected to the second electrode of the electrode group. In the above configuration, the conductive cap functions as the other of the external terminals of the battery.

The terminal plate has a first connection region configured to be connected to a first external terminal (e.g., a first bus bar). The first connection region may be a region that does not overlap with the gasket when viewed in the axial direction of the case. The first external terminal may be connected to the terminal plate by welding.

The conductive cap has a second connection region configured to be connected to a second external terminal (e.g., a second bus bar). The polarity of the second external terminal may be different from the polarity of the first external terminal. The second connection region may be a central region of the conducive cap. The second external terminal may be connected to the conductive cap by welding.

As described above, the battery according to the present disclosure has a configuration in which the terminal plate to which the first external terminal is to be connected, the case connected to the terminal plate, and the first electrode electrically connected to these have one (e.g., the negative polarity) of the polarities, while the conductive cap to which the second external terminal is to be connected and the second electrode to which the conductive cap is electrically connected have the other polarity (e.g., the positive polarity). In this battery, occurrence of an internal short circuit, for example, by which the case and the conductive cap become in electrical contact with each other, may pose a risk of electrical short-circuiting between the first external terminal and the second external terminal.

To tackle the above, the terminal plate according to the present disclosure has a planned breaking part located between the first connection region and a joint part joined to the opening edge of the case. The planned breaking part is configured to beak when the internal pressure of the case exceeds a predetermined value, separating the terminal plate in the axial direction of the case into a broken piece on the outer peripheral side and a broken piece on the inner peripheral side. When such breakage occurs, the first connection region (included in the broken piece on the inner peripheral side) to which the first external terminal is to be connected and the case in electrical contact with the terminal pate at the joint part (included in the broken piece on the outer peripheral side) are electrically insulated from each other. In the latter case, although the case and the conductive cap to which the second external terminal is to be connected are in electrical contact with each other due to the above-mentioned internal short-circuit, the first external terminal and the second external terminal are kept electrically insulated from each other due to the above-described electric insulation. That is, the current path between the first external terminal and the second external terminal can be interrupted by breakage of the planned breaking part of the present disclosure.

The planned breaking part may be a first thin part formed in the terminal plate. The first thin part may be the thinnest part of the terminal plate. The first thin part may be formed by forming a groove or a notch in the terminal plate. The first thin part such as above is likely to break due to stress concentration upon application of an external force to the terminal plate. Thus, reliability of the current interruption function of the battery according to present disclosure can be enhanced.

The terminal plate may have a transition part whose thickness changes from a first thickness to a second thickness in the radial direction of the case. The first thin part may be located at or near the transition part. At the transition part such as above, stress concentration occurs upon application of an external force to the terminal plate. As a result of the first thin part being provided at or near the transition part where such stress concentration occurs, the first thin part can further easily break. The first thickness may be greater than the thickness of the first thin part and smaller than the second thickness. Note that the first thin part being provided at the transition part means that the transition part and the thinnest part of the first thin part overlap with each other when viewed in the axial direction of the case. On the other hand, the first thin part being provided near the transition part means that the transition part and the thinnest part of the first thin part are within the range of more than 0 mm to 0.5 mm or less of each other in the radial direction of the case.

The first thin part may be formed over the entire circumference of the terminal plate in the circumferential direction of the case. The thickness of the first thin part may be the same over the entire circumference or may be partially different. Note that a plurality of first thin parts may be formed in the terminal plate intermittently in the circumferential direction of the case.

The insulating plate may be constituted of a thermal expansion material (e.g., polyphenylene sulfide or a copolymer of ethylene tetrafluoride and perfluoroalkoxyethylene) having a linear expansion coefficient at 25°C of 2.0 × 10⁻⁵/K or more. The insulating plate may be provided so as to overlap with an area of the terminal plate located inward of the planned breaking part when viewed in the axial direction of the case. In this case, upon heat generation in the battery, the insulating plate expands to push up a part of the terminal plate. Such push-up can facilitate breakage of the planned breaking part.

The conductive cap may have a second thin part formed thinner than the surrounding area thereof. In the radial direction of the case, the center between the innermost periphery and the outermost periphery of the second thin part may be located outward of the center between the innermost periphery and the outermost periphery of the insulating plate. In the radial direction of the case, the center between the innermost periphery and the outermost periphery of the second thin part may be located inward of the planned breaking part of the terminal plate. The second thin part of the conductive cap easily deforms when stress concentration occurs upon an increase in internal pressure of the battery. A part of the terminal plate is pushed up by the conductive cap whose the second thin part is deforming. Such push-up can facilitate breakage of the planned breaking part.

As described above, according to the present disclosure, provision of the planned breaking part in the terminal plate enables provision of a battery having the current interruption function. Furthermore, according to the present disclosure, it is possible in a battery pack including a plurality of such batteries to suppress a decrease in output power upon occurrence of an inner short circuit in some of the batteries.

Hereinafter, an example of the battery according to the present disclosure will be described in detail with reference to the drawings. The above-described elements of configuration can be applied to the elements of configuration of the exemplary battery described below. The elements of configuration of the exemplary battery described below can be altered based on the above description. Further, the matters described below may be applied to the above-described embodiments. Among the elements of configuration of the exemplary battery described below, an element of configuration that is not essential to the battery according to the present disclosure may be omitted. It should be noted that the drawings indicated below are schematic and do not accurately reflect the shape or number of actual members.

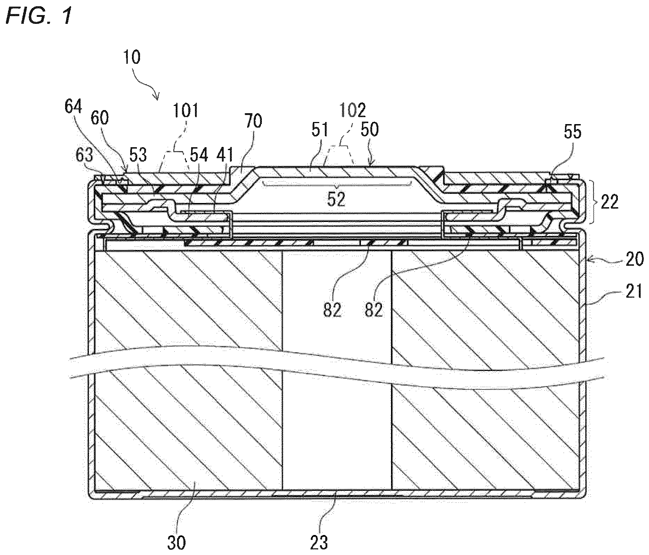

A battery 10 of the present embodiment is configured as a lithium-ion secondary battery, but is not limited thereto. As illustrated in FIG. 1, the battery 10 includes a case 20, an electrode group 30, a sealing unit 50, a terminal plate 60, and an insulating plate 70.

The case 20 is formed in a bottomed cylindrical shape having an opening at one end (upper end in FIG. 1) thereof, and includes a side wall 21 formed in a cylindrical shape, and a disk-shaped bottom 23. A crimped part 22 that fixes the sealing unit 50 is formed in an area of the side wall 21 in the vicinity of the opening. The case 20 in the present embodiment is constituted of a metal containing iron as a main component, but is not limited thereto.

The electrode group 30 is housed in the case 20, and includes a negative electrode and a positive electrode. The electrode group 30 is a wound electrode group of the negative electrode and the positive electrode, wound with a separator therebetween. The outer shape of the electrode group 30 is cylindrical. The negative electrode is electrically connected to the bottom 23 of the case 20, while the positive electrode is electrically connected to a current collector plate 54 (described later) of the sealing unit 50 via a positive electrode lead 41. The negative electrode is an example of the first electrode, and the positive electrode is an example of the second electrode.

The sealing unit 50 seals the opening of the case 20. The sealing unit 50 includes a conductive cap 51, a current collector plate 54, and a gasket 55. The conductive cap 51 is constituted of metal and is exposed to the outside of the case 20. The current collector plate 54 is constituted of metal, is provided closer to the electrode group 30 (lower side in FIG. 1) than the conductive cap 51, and is joined to the conductive cap 51, for example, by welding. Since the current collector plate 54 is electrically connected to the positive electrode of the electrode group 30 as described above, the conductive cap 51 joined to the current collector plate 54 functions as an external positive electrode terminal. The gasket 55 is constituted of an insulating resin and is provided between the conductive cap 51, the current collector plate 54, and the crimped part 22 of the case 20.

A first insulating plate 81 and a second insulating plate 82 are provided between the electrode group 30 and the sealing unit 50. The first insulating plate 81 is provided closer to the electrode group 30 (lower side in FIG. 1) than the second insulating plate 82. The first insulating plate 81 is provided between the electrode group 30 and the positive electrode lead 41 to prevent contact between the negative electrode of the electrode group 30 and the positive electrode lead 41. The second insulating plate 82 is provided between the case 20 and the positive electrode lead 41 to prevent contact between the case 20 and the positive electrode lead 41.

The terminal plate 60 is joined to the opening edge of the case 20 by welding, and extends radially inward of the case 20. The terminal plate 60 is constituted of metal and is exposed to the outside of the case 20. The terminal plate 60 is formed in a circular ring shape. Since the case 20 is electrically connected to the negative electrode of the electrode group 30 as described above, the case 20 and the terminal plate 60 joined thereto function as an external negative electrode terminal.

The insulating plate 70 is provided between the conductive cap 51 and the terminal plate 60 to electrically insulate them from each other. The insulating plate 70 is formed in a substantially circular ring shape. The insulating plate 70 is constituted of an insulating resin having a melting point higher than that of the gasket 55. Further, the insulating plate 70 is constituted of a thermal expansion material having a linear expansion coefficient at 25°C of 2.0 × 10⁻⁵/K or more. The outer peripheral end of the insulating plate 70 is in contact with the gasket 55, but is not limited thereto.

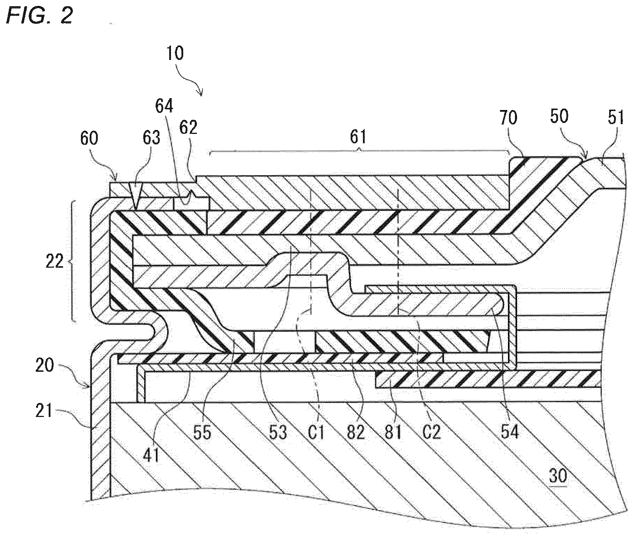

As illustrated in FIGS. 1 and 2, the terminal plate 60 has a first connection region 61 configured to be connected to a first external terminal 101 (e.g., a first bus bar). The thickness of the first connection region 61 (the vertical length in FIG. 2) may be 0.5 mm or more and 0.6 mm or less, for example. The terminal plate 60 has a transition part 62 whose thickness in the radial direction of the case 20 changes from a first thickness (e.g., about 0.3 mm) to a second thickness (e.g., about 0.4 mm). In the transition part 62 of the present embodiment, the thickness of the terminal plate 60 changes stepwise, but is not limited thereto.

The conductive cap 51 has a second connection region 52 configured to be connected to a second external terminal 102 (e.g., a second bus bar having a polarity different from that of the first bus bar). The second connection region 52 may be, for example, a region of the conductive cap 51 exposed through the opening of the insulating plate 70. The conductive cap 51 has a second thin part 53 formed thinner than the surrounding area thereof. In the radial direction of the case 20, the center (indicated by a dash-dot line C1) between the innermost periphery and the outermost periphery of the second thin part 53 is located outward of the center (indicated by a dash-dot line C2) between the innermost periphery and the outermost periphery of the insulating plate 70.

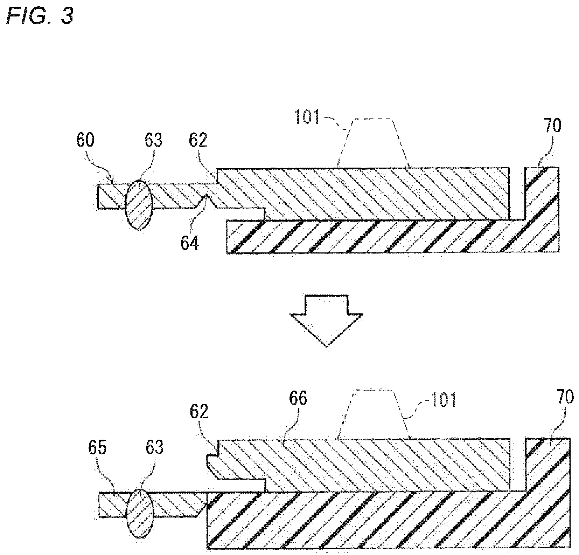

The terminal plate 60 includes a first thin part 64 provided between the first connection region 61 and a joint part 63 joined to the opening edge of the case 20. The first thin part 64 is provided in the vicinity of the transition part 62 (in this example, slightly outward of the transition part). The first thin part 64 is provided outward of the outer peripheral end of the insulating plate 70. The first thin part 64 is provided outward of the outer peripheral end of the second thin part 53. The first thin part 64 is formed over the entire circumference of the terminal plate 60 in the circumferential direction of the case 20. As illustrated in FIG. 3, the first thin part 64 is configured to break when the internal pressure of the case 20 exceeds a predetermined value, separating the terminal plate 6 in the axial direction of the case 20 into a broken piece 65 on the outer peripheral side and a broken piece 66 on the inner peripheral side. Here, when the internal pressure of the case 20 increases to generate heat in the case 20, the insulating plate 70 constituted of the thermal expansion material expands to push up a part of the terminal plate 60 corresponding to the broken piece 66 on the inner peripheral side, thereby promoting breakage. In the same case as above, the second thin part 53 of the conductive cap 51 largely deforms outward of the case 20 to push up a part of the terminal plate 60 corresponding to the broken piece 66 on the inner peripheral side, thereby promoting breakage. The first thin part 64 is an example of the planned breaking part.

### <<Supplemental Remarks>>

According to the above description of the embodiments, the following techniques are disclosed.

### (Technique 1)

A battery including:
a case with a bottomed cylindrical shape having an opening at one end thereof;
an electrode group housed in the case and including a first electrode and a second electrode;
a sealing unit that includes a conductive cap and that seals the opening;
a terminal plate joined to an opening edge of the case and extending radially inward of the case; and
an insulating plate that electrically insulates the conductive cap from the terminal plate, wherein
the case and the terminal plate are electrically connected to the first electrode,
the conductive cap is electrically connected to the second electrode,
the terminal plate has a first connection region configured to be connected to a first external terminal,
the conductive cap has a second connection region configured to be connected to a second external terminal,
the terminal plate has a planned breaking part located between the first connection region and a joint part thereof joined to the opening edge of the case, and
the planned breaking part is configured to break when an internal pressure of the case exceeds a predetermined value, separating the terminal plate in an axial direction of the case into a broken piece on an outer peripheral side and a broken piece on an inner peripheral side.

### (Technique 2)

The battery according to Technique 1, wherein the planned breaking part is a first thin part formed in the terminal plate.

### (Technique 3)

The battery according to Technique 2, wherein the terminal plate has a transition part whose thickness changes from a first thickness to a second thickness in a radial direction of the case, and the first thin part is located at or near the transition part.

### (Technique 4)

The battery according to Technique 2 or 3, wherein the first thin part is formed over an entire circumference of the terminal plate in a circumferential direction of the case.

### (Technique 5)

The battery according to any one of Techniques 1 to 4, wherein the insulating plate is constituted of a thermal expansion material having a linear expansion coefficient at 25°C of 2.0 × 10⁻⁵/K or more.

### (Technique 6)

The battery according to any one of Techniques 1 to 5, wherein the conductive cap has a second thin part formed thinner than a surrounding area thereof, and
in a radial direction of the case, a center between an innermost periphery and an outermost periphery of the second thin part is located outward of a center between an innermost periphery and an outermost periphery of the insulating plate.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used for batteries.

### [Reference Signs List]

- 10:: Battery
20: Case
21: Side wall
22: Crimped part
23: Bottom
30: Electrode group
41: Positive electrode lead
50: Sealing unit
51: Conductive cap
52: Second connection region
53: Second thin part
54: Current collector plate
55: Gasket
60: Terminal plate
61: First connection region
62: Transition part
63: Joint part
64: First thin part (planned breaking part)
65: Broken piece on outer peripheral side
66: Broken piece on inner peripheral side
70: Insulating plate
81: First insulating plate
82: Second insulating plate
- 101:: First external terminal
- 102:: Second external terminal

## Claims

1. A battery comprising:
a case with a bottomed cylindrical shape having an opening at one end thereof;
an electrode group housed in the case and including a first electrode and a second electrode;
a sealing unit that includes a conductive cap and that seals the opening;
a terminal plate joined to an opening edge of the case and extending radially inward of the case; and
an insulating plate that electrically insulates the conductive cap from the terminal plate, wherein
the case and the terminal plate are electrically connected to the first electrode,
the conductive cap is electrically connected to the second electrode,
the terminal plate has a first connection region configured to be connected to a first external terminal,
the conductive cap has a second connection region configured to be connected to a second external terminal,
the terminal plate has a planned breaking part located between the first connection region and a joint part thereof joined to the opening edge of the case, and
the planned breaking part is configured to break when an internal pressure of the case exceeds a predetermined value, separating the terminal plate in an axial direction of the case into a broken piece on an outer peripheral side and a broken piece on an inner peripheral side.

2. The battery according to claim 1, wherein
the planned breaking part is a first thin part formed in the terminal plate.

3. The battery according to claim 2, wherein
the terminal plate has a transition part whose thickness changes from a first thickness to a second thickness in a radial direction of the case, and
the first thin part is located at or near the transition part.

4. The battery according to claims 2 and 3, wherein
the first thin part is formed over an entire circumference of the terminal plate in a circumferential direction of the case.

5. The battery according to any one of claims 1 to 3, wherein
the insulating plate is constituted of a thermal expansion material having a linear expansion coefficient at 25°C of 2.0 × 10⁻⁵/K or more.

6. The battery according to any one of claims 1 to 3, wherein
the conductive cap has a second thin part formed thinner than a surrounding area thereof, and
in a radial direction of the case, a center between an innermost periphery and an outermost periphery of the second thin part is located outward of a center between an innermost periphery and an outermost periphery of the insulating plate.
